# EUROPEAN PATENT APPLICATION

(11) **EP 4 632 554 A1**
(43) Date of publication of application: **15.10.2025**
(21) Application number: 25169344.6
(22) Date of filing: 09.04.2025
(51) Int. Cl.: G06F 3/14, G09G 5/14

(54) **INFORMATION PROCESSING METHOD, INFORMATION PROCESSING DEVICE, AND COMPUTER PROGRAM**

(30) Priority: 09.04.2024 JP 2024062961
(71) Applicant: Faurecia Clarion Electronics Co., Ltd., Saitama-shi, Saitama 330-0081 (JP)
(72) Inventor: ISHIKAWA, Takashi, Saitama-shi, 330-0081 (JP)
(74) Representative: Lavoix

(57) **Abstract**

[Problem] To prevent even occurrence of an event that requires an alteration in the vertical width and/or the horizontal width of the screen image displayed on the external display unit from reducing the visibility of the screen image displayed on an external display unit.

[Solution] An information processing device receives information on a vertical width and a horizontal width of an external display unit, and generates, based on the information, screen data on a screen image to be displayed on the external display unit. When an event requiring an alteration in the vertical width and/or the horizontal width of a screen displayed on an external display unit occurs, the information processing device transmits screen data including: screen data on a first content obtained by altering the screen displayed on the external display unit at that time to a size corresponding to an altered vertical width and an altered horizontal width; and screen data on a second content to an external terminal device. The second content, generated in the external display unit, is displayed in a region due to a difference between a pre-altered vertical width and the corresponding post-altered vertical width displayed on the external display unit, and between a pre-altered horizontal width and the post-altered horizontal width of the external display unit.

## Description

### [FIELD OF THE INVENTION]

The present invention relates to a technique for displaying a screen on an external terminal device communicably connected to an information processing device.

### [BACKGROUND ART]

Patent Literature 1 discloses a technique for displaying a screen of a user terminal device on a screen of an instrument unit or the like of a vehicle.

### [PRIOR ART DOCUMENTS]

### [PATENT DOCUMENTS]

Patent Document 1: US10,923,073

### [SUMMARY OF THE INVENTION]

### [PROBLEM TO BE SOLVED BY THE INVENTION]

According to the technique disclosed in Patent Literature 1, an image of a screen (also referred to as a screen image or simply, a screen) of a user terminal device is displayed on a screen of an instrument unit or the like of a vehicle. An on-vehicle device such as an instrument unit of a vehicle is an example of an information processing device, whereas a user terminal device is an example external terminal device communicably connected to the information processing device.

It is technically possible that the information processing device transmits screen data to the external terminal device to cause the external terminal device to display an image of a screen represented by the screen data.

An event may occur where the vertical width and/or the horizontal width of a screen displayed on an external display unit, which is a display unit of an external terminal device, needs to be altered. It is conceivable that occurrence of such an event shall cause the external terminal device to reconstruct the screen image represented by the screen data from the information processing device and then to display the reconstructed screen image on the external display unit.

The reconstructed screen image being currently displayed on the external display unit, however, may be a poorly visible screen image for a user of the external terminal device (e.g., a screen image that is stretched in the vertical direction or in the horizontal direction to render a screen image with poor visibility).

An object of the present invention is to prevent even occurrence of an event that requires an alteration in the vertical width and/or the horizontal width of the screen image displayed on the external display unit from reducing the visibility of the screen image displayed on an external display unit.

### [MEANS FOR SOLVING THE PROBLEM]

An information processing device receives information on a vertical width and a horizontal width of an external display unit (i.e., a display unit of an external terminal device), and generates, based on the information, screen data on a screen image to be displayed on the external display unit. When an event requiring an alteration in the vertical width and/or the horizontal width of a screen displayed on an external display unit occurs, the information processing device transmits screen data including: screen data on a first content obtained by altering the screen displayed on the external display unit at that time to a size corresponding to an altered vertical width and an altered horizontal width; and screen data on a second content to an external terminal device. The second content, generated in the external display unit, is displayed in a region due to a difference between a pre-altered vertical width and the corresponding post-altered vertical width displayed on the external display unit, and between a pre-altered horizontal width and the post-altered horizontal width of the external display unit.

Further, the invention is set out in the independent apparatus claim, independent computer program claim and the independent method claim, respectively. Favorable embodiments of the invention are set out in the appended claims.

### [EFFECT OF THE INVENTION]

According to the present invention, even occurrence of an event that requires an alteration in the vertical width and/or the horizontal width of the screen image displayed on the external display unit can be prevented from reducing the visibility of the screen image displayed on an external display unit. The following description of the embodiments will elucidate the problems, configurations, and effects other than those described above.

### [BRIEF DESCRIPTION OF THE DRAWINGS]

FIG. 1 is a diagram depicting an overall configuration of a system according to an embodiment of the present invention.
FIG. 2 is a diagram illustrating an example displayed screen image in Mirroring mode.
FIG. 3 is a diagram illustrating an example displayed screen image in Extension mode.
FIG. 4 is a flow chart illustrating an example flow of processes conducted, in Mirroring mode, by an on-vehicle device.
FIG. 5 is a flow chart illustrating an example flow of processes conducted, in Mirroring mode, by an external terminal device.
FIG. 6 is a flow chart illustrating an example flow of processes conducted, in Extension mode, by the on-vehicle device.
FIG. 7 is a flow chart illustrating an example flow of processes conducted, in Extension mode, by the external terminal device.

### [EMBODIMENTS OF THE INVENTION]

An embodiment of the present invention is described below with reference to the figures. In the embodiment, an on-vehicle device is used as an example information processing device, but the information processing device may be a device other than the on-vehicle device.

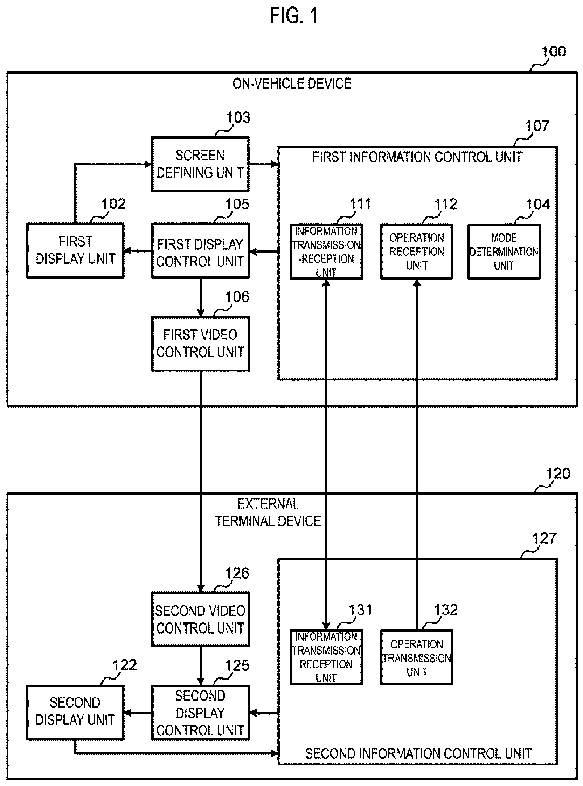

FIG. 1 is a diagram depicting an overall configuration of a system according to an embodiment of the present invention.

The on-vehicle device 100 can communicate wirelessly with an external terminal device 120 using Wi-Fi (registered trademark) or Ethernet (registered trademark). For example, the on-vehicle device 100 can function as an access point. The external terminal device 120 is an information processing terminal device such as a smartphone or tablet device of a user occupying the driver's seat or another seat. The external terminal device 120 may be a mobile terminal device or may be an information processing terminal device, such as a monitor device removably or unremovably attached to a place other than the driver's seat in the vehicle (for instance, a front passenger seat, or left and right rear seats).

Though not depicted in the figures, the on-vehicle device 100 has an interface device, and input/output device, and a storage device, as well as a processor, which is connected with these devices. The on-vehicle device 100 is in communication with the external terminal device 120 via the interface device. The input/output device is a first display unit 102 (for instance, a screen as a piece of the hardware). The first display unit 102 may be a touch panel.

A storage device stores data and computer programs. Execution, by the processor, of a computer program implements the functions of, for instance, a screen defining unit 103, a first display control unit 105, a first video control unit 106, and a first information control unit 107.

The screen defining unit 103 acquires, from the first display unit 102 or the storage device in the on-vehicle device 100, first display unit information, which is information related to the vertical width and the horizontal width of the first display unit 102. The first display unit information includes, for instance, information representing at least one of an aspect ratio, a resolution, and a set of the vertical and horizontal sizes of the first display unit 102.

The first display-control unit 105 is an example screen generation unit. The first display-control unit 105 is configured to generate screen data of a screen to be displayed on the first display unit 102 and/or screen data of a screen to be displayed on the second display unit 122. Here, the "screen" represented by the screen data is not a screen as a part of hardware such as the first display unit 102 and the second display unit 122, but it means screen information (for instance, a character, an image, a video, or the like displayed on a screen of a hardware screen), such as what is called a screen image.

The first information control unit 107 is an example reception unit. The first information control unit 107 acquires second display unit information (which is an example external display unit information), which is information on a vertical width and a horizontal width of the second display unit 122 included in the external terminal device 120.The second display unit information includes, for instance, information representing at least one of an aspect ratio, a resolution, and a set of the vertical and horizontal sizes of the second display unit 122. The first display control unit 105 is configured to generate, based on the second display unit information received by the first information control unit 107, screen data of a screen image to be displayed on the second display unit 122. Generation of the screen data of a screen image to be displayed on the second display unit 122 is based on the first display unit information in addition to the second display-unit information. The first information control unit 107 includes, for instance, functional units, such as a mode determination unit 104, an information transmission reception unit 111, and an operation reception unit 112. The mode determination unit 104 is configured to determine, from among a plurality of modes, the mode employed for the screen image to be displayed on the second display unit 122.The information transmission reception unit 111 is configured to receive the second display unit information from the information transmission reception unit 131 of the external terminal device 120. The operation reception unit 112 receives, from the operation transmission unit 132 of the external terminal device 120, operation information representing specific details of the operations performed with the external terminal device 120 (for instance, alterations in the direction or form of the external terminal device 120, or the specific details of the touch operations to or the positions touched on the second display unit 122).

The first video control unit 106 is an example transmission unit. The first video control unit 106 is configured to transmit, to the external terminal device 120, the screen data of a screen image to be displayed on the second display unit 122 (screen data generated by the first display control unit 105). Screen data are, for instance, encoded and sent to the external terminal device 120 using RTP (Real-time Transport Protocol).

Though not depicted in the figures, the external terminal device 120 has an interface device, an input/output device, and a storage device, as well as a processor, which is connected with these devices. The external terminal device 120 is operable to communicate with the on-vehicle device 100 via the interface device. The input/output device may be the second display unit 122. The second display unit is, typically, a touch panel.

The storage device is configured to store data and computer programs. Execution, by the processor, of a computer program, implements the functions of, for instance, the second information control unit 127, the second video control unit 126, and the second display control unit 125.

The second information control unit 127 exchanges, with the on-vehicle device 100, information on the screen data received by the second video control unit 126 and other information. The second information control unit 127 includes, for instance, the functions of, for instance, an information transmission reception unit 131 and an operation transmission unit 132. The information transmission reception unit 131 is configured to acquire second display unit information from the second display unit 122 (or a storage device in the external terminal device 120), and to transmit the second display unit information to the information transmission reception unit 111 of the on-vehicle device 100. The operation transmission unit 132 is configured to transmit, to the operation reception unit 112 of the on-vehicle device 100, operation information representing the specific details of an operation performed on the external terminal device 120.

The second video control unit 126 is configured to receive, form the on-vehicle device 100, the screen data of the screen image to be displayed on the second display unit 122. The second display control unit 125 is configured to cause the second display unit 122 to display the screen image represented by the decoded screen data.

The following is example processes performed by this embodiment.

The first information control unit 107 in the on-vehicle device 100 receives the second display unit information. The information transmission reception unit 111 of the first information control unit 107 receives, from the information transmission-reception unit 131 of the second information control unit 127, the second display unit information.

Based on the second display unit information received by the first information control unit 107, the first display control unit 105 generates screen data on a screen image to be displayed on the second display unit 122. The first video control unit 106 transmits, to the external terminal device 120, the screen data generated by the first display control unit 105.

The second video control unit 126 in the external terminal device 120 receives the screen data transmitted from the on-vehicle device 100. The second display control unit 125 causes the second display unit 122 to display the screen image represented by the screen data received by the second video control unit 126.

Here, the screen data transmitted to the external terminal device 120 are any one of the following screen data:
- First screen data, which are of the same screen image as the screen image to be displayed on the first display unit 102;
- Second screen data, which are of a screen image (which may be referred to as an extended screen image) to be displayed only on the second display unit 122 out of the two display units, i.e., the first display unit 102 and the second display unit 122; and
- Third screen data, which include: screen data on a first content obtained by altering the screen image displayed on the second display unit 122 to fit the sizes corresponding to the altered vertical width and the altered horizontal width of the second display unit 122; and screen data on a second content.

Occurrence of a target event, which requires alteration(s) of the vertical width and/or the horizontal width of the screen image displayed on the second display unit 122, makes the transmission unit transmit the third screen data to the external terminal device 120. The "transmission unit" mentioned in this paragraph may include, in addition to the first video control unit 106, at least a part of the first information control unit 107.

Even the occurrence of such a target event due to the transmission of the third screen data cannot allow the screen image that will be displayed on the second display unit 122, to be stretched, vertically and/or horizontally, to such an extent that will harm the visibility. Hence, the screen image becomes capable of maintaining the satisfactory high visibility for the user.

An example occurrence of a target event is an occasion "of a satisfied requirement demanding a large enough difference between the first display unit information and the second display unit information." Hereinafter, such a requirement is referred to as a "target requirement."

The phrase, "large enough difference between the first display unit information and the second display unit information" means the following state. Now, assume a case where the screen image according to the first display unit information is displayed on the second display unit 122 with the same relationship maintained between the vertical width and the horizontal width of the screen image. In this case, the relationship of the vertical width with the horizontal width of the screen image according to the second display unit information differs greatly enough from the corresponding relationship of the screen image according to the first display unit information to generate a large free space in the second display unit 122. Therefore, for instance, occurrence of a satisfied target requirement may indicate any one of the following states.
- The orientation of the second display unit 122 is different from the orientation of the first display unit 102. For instance, it may be a case where the first display unit 102 has a first orientation (e.g., an orientation in which the horizontal direction is longer than the vertical direction) while the second display unit 122 has a second orientation (e.g., an orientation in which the horizontal direction is shorter than the vertical direction). An alternative case of satisfying the target requirement may be a case where an alteration occurs in the form of the external terminal device 120 (e.g., by sliding a part of the external terminal device 120 or folding the external terminal device 120).
- The feature value of the relationship between the vertical width and the horizontal width of the screen image according to the first display unit information is different, by a predetermined or greater difference, from the feature value of the relationship between the vertical width and the horizontal width of the screen according to the second display unit information.

The satisfaction of the target requirement is detected, for instance, in the following way. The first information control unit 107 compares the first display unit information and the second display unit information, and as a result of the comparison, detects the satisfaction of the target requirement based on the information representing the state of the orientation or the like of the external terminal device 120 (which is at least a part of the information received from the external terminal device 120) and/or the specific details of the operations represented by the operation information from the second information-control unit 127. Specifically, the first information control unit 107 detects the satisfaction of the target requirement, for instance, in the following occasions.
- An occasion of identifying: both a wider horizontal width of the first display unit 102 than the vertical width thereof based on the first display unit information; and a wider vertical width of the second display unit 122 than the horizontal width thereof based on the second display unit information.
- An occasion of identifying: both a shorter horizontal width of the first display unit 102 than the vertical width thereof based on the first display unit information; and a shorter vertical width of the second display unit 122 than the horizontal width thereof based on the second display unit information. The difference in the orientation of the external terminal device 120 affects the difference between the relationships each of which the vertical width of the screen displayed on the second display unit 122 has with the horizontal width thereof. The detection of the difference in the orientation of the external terminal device 120 is an efficient means for detecting the satisfied/unsatisfied target requirement.

Satisfaction of the target requirement causes the transmission unit to transmit the third screen data to the external terminal device 120. The first content and the second content represented by the third screen data may be displayed on the second display unit 122 in any of the following manners. The second content, generated in the second display unit 122, is displayed in a region due to a difference between the pre-altered vertical width and the corresponding post-altered vertical width displayed on the second display unit 122 and between the pre-altered horizontal width and the post-altered horizontal width of the second display unit 122.
- Detection of the satisfied target requirement causes the first display control unit 105 to generate the third screen data. The first video control unit 106 then transmits, to the external terminal device 120, the third screen data thus generated. As a result, the second display unit 122 displays both the first content and the second content thereon.
- Even before the detection of the satisfied target requirement, the first display control unit 105 generates the third screen data based on the first display unit information and on the second display unit information that is for the case of satisfied target requirement. Detection of the satisfied target requirement causes the first video control unit 106 to transmit, to the external terminal device 120, the third screen data generated in advance. As a result, the second display unit 122 displays both the first content and the second content thereon.
- Even before the detection of the satisfied target requirement, the first display control unit 105 generates the third screen data based on the first display-unit information and on the second display-unit information that is for the case of satisfied target requirement. The first video control unit 106 transmits, to the external terminal device 120, the generated third screen data, which are accumulated in the external terminal device 120 (e.g., the current third screen data may overwrite the previous ones). Detection of the satisfied target requirement causes the information transmission-reception unit 111 to transmit, to the information transmission reception unit 131 of the external terminal device 120, information representing the detection of the target requirement or an instruction to display the third screen data. The transmission of such information or such an instruction corresponds to the transmission of the screen data to the external terminal device 120 for the case of occurrence of a target event. In response to the information or the instruction, the second information-control unit 127 instructs the second display control unit 125 to display, on the second display unit 122, the first content and the second content represented by the third screen data having been transmitted in advance and stored in the external terminal device 120. As a result, the second display unit 122 displays both the first content and the second content thereon.

The first display control unit 105 generates screen data based on, in addition to the second-display unit information, the mode determined by the mode determination unit 104. Hence, when the relationship between the vertical width and horizontal width of first display unit 102 differs, by a large difference, from the relationship between the vertical width and horizontal width of second display unit 122, the second display unit 122 displays thereon the first content and the second content represented by the third screen data in accordance with the determined mode. As a result, the external terminal device 120 can display a highly visible screen image for the user.

Specifically, for example, the multiple modes include Mirroring mode (an example of the first mode) and Extension mode (an example of the second mode). Mirroring mode is a mode in which the second display unit 122 displays thereon the same screen image as the one displayed on first display unit 102. Extension mode is a mode in which the second display unit 122 displays thereon a different screen image than the one displayed on first display unit 102. Setting of the Mode selected from Mirroring mode and Extension mode may be conducted on an application-by-application basis, or may conducted in a different fashion.

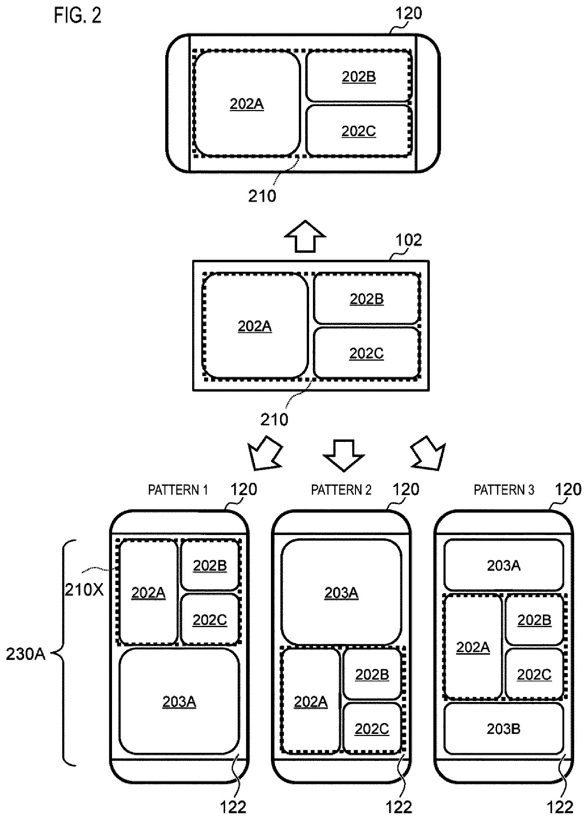

FIG. 2 illustrates an example Mirroring-mode display.

When, in Mirroring mode, a unsatisfied target requirement causes the transmission, to the external terminal device 120, of the first screen data of the same screen image 210 as the screen image 210 displayed on the first display unit 102 of the on-vehicle device 100. Consequently, the same screen image 210 appears on the second display unit 122. The screen 210 may be, for instance, a screen image including a collection of a plurality of sub-screen images 202A to 202C. The plurality of sub-screen images 202A to 202C may be a plurality of sub-screen images generated by the same application or may be a plurality of sub-screen images generated by a plurality of applications. In the latter case, the screen image 210 may be a screen image generated by a plurality of applications that are configured to generate and transmit, as a single screen image, a plurality of sub-screens generated by a plurality of applications.

In Mirroring mode, a satisfied target requirement causes the transmission, to the external terminal device 120, of the third screen data in place of the first screen data. Then, the second display unit 122 displays thereon a screen image 230A represented by the third screen data instead of the screen image 210. Specifically, for instance, detection, by the first information control unit 107, of the satisfied target requirement causes the first display control unit 105 to generate the third screen data based on the second display unit information. The first video control unit 106 transmits the generated third screen data to the external terminal device 120. Thereby, the second display unit 122 of the external terminal device 120 displays thereon the screen image 230A, instead of screen image 210.

Third screen data include: the screen data on a first content 210X obtained by, upon satisfaction of the target requirement, altering the screen image 210 displayed on the second display unit 122 to fit the sizes corresponding to the post-altered vertical width and the post-altered horizontal width of the second display unit 122; and the screen data on a second content 203A. Hence, the screen image 230A includes a first content 210X and the second content 203A. For example, the first display control unit 105 determines the relationship between the vertical width and the horizontal width of the first content 210X, which forms a part of the screen image 230A (i.e., the post-altered relationship between the vertical width and the horizontal width after the alteration of the screen image 210) on the basis of the first display unit information and the second display unit information (e.g., the magnitude of the difference between the first relationship of the set of the vertical width and the horizontal width and the second relationship of the corresponding set) for a case of the satisfied the target requirement.The first display control unit 105 generates the screen data of the first content 210X in accordance with the determined relationship between the vertical width and the horizontal width. "The determined relationship between the vertical width and the horizontal width" may be one that is maintained from the relationship between the vertical width and the horizontal width (e.g., the aspect ratio) before the satisfaction of the target requirement. Alternatively, it may be the post-altered relationship between the vertical width and the horizontal width resulting from the alteration of the corresponding pre-altered relationship between the vertical width and the horizontal width before the satisfaction of the target requirement. In this way, the screen image 210 is reconstructed (e.g, with a reduced size) to the first content 210X (i.e., screen image). The first display control unit 105 generates the screen data of the second content 203A having the relationship between the vertical width and the horizontal width based on the second display-unit information for the satisfaction of the target requirement. The first display control unit 105 generates the third screen data including the screen data of the first content 210X and the screen data of the second content 203A. Relationship between the vertical width and the horizontal width of the screen image 230A represented by the third screen data is dependent on the second, corresponding relationship between the vertical width and the horizontal width for the satisfied target requirement. For instance, the aspect ratio of the screen image 230A may be the same as the aspect ratio of the second display unit 122, and the screen image 230A may be displayed on the entire area of the second display unit 122.

The on-vehicle device 100 also displays the same screen image 210 as the first content 210X in the screen image 230A, and thus the user (for instance, the driver) of the on-vehicle device 100 shares the same screen image 210. Hence, the second content 203A may be a content (i.e., screen image) associated with the first content 210X, for instance, a user interface (UI) for receiving an operation, on the on-vehicle device 100, for the first content 210X, or may be an auxiliary screen image (e.g., a screen image as a supplement to the screen image 210) associated with the first content 210X. For example, description is provided to a case of the second content 230A on the screen 203A being a UI for operating the first content 210X. When the operation transmission unit 132 identifies a user operation having been performed on the second content 230A on the screen 203A, the first information control unit 107 of the on-vehicle device 100 receives, from the external terminal device 120, operation information representing the specific details of the user operation. In accordance with the operation information, the application causing the displaying of the screen image 210 is controlled (i.e., the screen 210 is updated by the first display control unit 105). In this way, it is possible to provide the user with a highly visible screen image 230A, and to provide the user with a highly convenient UI because of the improved operability of the screen 210 and the increased amount of information that can be recognized by the user.

In addition, the configuration of the screen 230A is not limited to a specific single pattern, but there may be several patterns for the same purpose. According to the example illustrated in FIG. 2, there are three patterns, i.e., Patterns 1 to 3. Pattern 1 is a pattern with the first content 230A arranged above the second content 210X in the screen image 203A. Pattern 2 is a pattern with the first content 230A arranged below the second content 210X in the screen image 203A. Pattern 3 is a pattern with a plurality of second contents 203 (e.g., two second contents 203A and 203B) arranged in the screen image 230A. The plurality of second contents 203 may be arranged contiguously or may be dispersed as illustrated in the drawing. The first display control unit 105 may determine which one of a plurality of patterns should be adopted for the configuration of the screen 230A based either: on the operation information acquired from external terminal device 120 through the first information-control unit 107 (e.g., the operation information according to the operations performed by the user of the external terminal device 120); or on the characteristics of the first content 210X or of the second content 203 (e.g., the format, the genre, or other characteristics of the content).

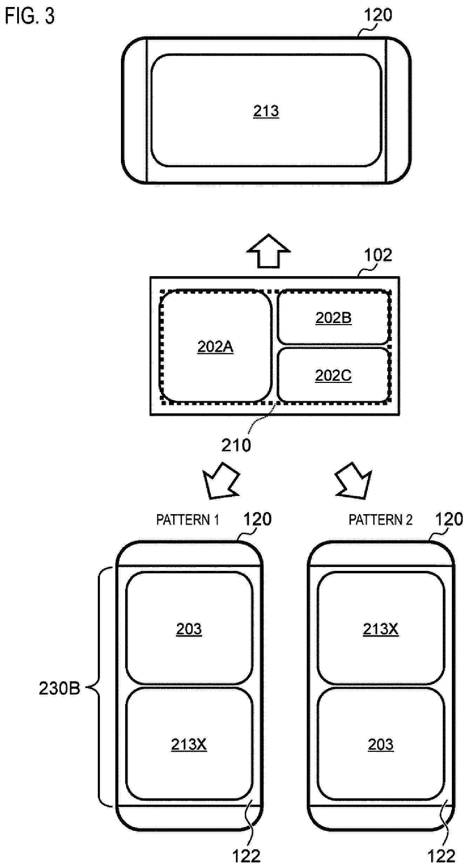

FIG. 3 illustrates an example of the display for a case of the mode being Extension mode.

When, in the Extension mode, a unsatisfied target requirement causes the transmission, to the external terminal device 120, of the second screen data of a different screen image 213 (i.e., extension screen image) than the screen image 210 displayed on the first display unit 102 of the on-vehicle device 100. Consequently, the different screen image 213 appears on the second display unit 122. Specifically, in Extension mode, the first display control unit 105 generates the second screen data in the background of the display of the screen image 210. The first video control unit 106 transmits the second data to the external terminal device 120. Thereby, the screen image 213 represented by the second data appears on the second display unit 122 of the external terminal device 120.

In Extension mode, the satisfied target requirement causes the second display unit 122 of the external terminal device 120 to display thereon the screen image 230B instead of the screen image 213. Specifically, for instance, detection, by the first information control unit 107, of the satisfied target requirement causes the first display control unit 105 to generate the third screen data based on the second display unit information. The first video control unit 106 transmits the generated third screen data to the external terminal device 120. Thereby, the second display unit 122 of the external terminal device 120 displays thereon the screen image 230B, instead of screen image 213.

Third screen data include: the screen data on a first content 213X obtained by, upon satisfaction of the target requirement, altering the screen image 213 displayed on the second display unit 122 to fit the sizes corresponding to the altered vertical width and the altered horizontal width of the second display unit 122; and the screen data on a second content 203. Hence, the screen image 230B includes a first content 213X and the second content 203. For example, the first display control unit 105 determines the relationship between the vertical width and the horizontal width of the first content 213X serving as a part of the screen image 230B based on the second display unit information the satisfaction of the target requirement. The first display control unit 105 then generates the screen image of the first content 213X according to the determined relationship between the vertical width and the horizontal width. In addition, the first display control unit 105 generates the screen data of the second content 203 having the relationship between the vertical width and the horizontal width based on the second display unit information for the satisfaction of the target requirement. The first display control unit 105 generates the third screen data including the screen data of the first content 213X and the screen data of the second content 203.Relationship between the vertical width and the horizontal width of the screen image 230B represented by the third screen data is dependent on the second, corresponding relationship between the vertical width and the horizontal width for the satisfied target requirement. For instance, the aspect ratio of the screen image 230B may be the same as the aspect ratio of the second display unit 122, and the screen image 230B may be displayed on the entire area of the second display unit 122.

The first content 213X may be a content associated with the screen image 210 displayed on the first display unit 102 or may be a content unassociated with the screen image 210. The second content 203 may be a content associated with the screen image 210 or the first content 213X. Alternatively, it may be a content associated with neither the screen 210 nor the first content 213X. For example, the second content 203 may be an auxiliary screen image of the UI displayed as the first content 213X or may be an auxiliary screen image of an auxiliary UI. In this way, it is possible to provide the user with a highly visible screen image 230B, and to provide the user with a highly convenient UI because of the improved operability of the first content 213X and the increased amount of information that can be recognized by the user.

The configuration of the screen 230B is not limited to a specific single pattern, but there may be several patterns for the same purpose. According to the example shown in FIG. 3, there are two patterns, i.e., Patterns 1 and 2. That is, in the screen 230B, either the first content 213X or the second content 203 may be arranged on the upper side. The first display control unit 105 may determine which one of a plurality of patterns should be adopted for the configuration of the screen 230B based either: on the operation information acquired from external terminal device 120 through the first information-control unit 107 (e.g., the operation information according to the operations performed by the user of the external terminal device 120); or on the characteristics of at least one of the first content 213X and the second content 203 (e.g., the format, the genre, or other characteristics of the content)

As described above, the screen 230 represented by the third screen data may be either the screen image 230A or the screen image 230B described above. As a result, the screen 230 can be displayed in accordance with the selected mode, resulting in improved visibility for the user. In addition, since operability of each screen is improved and information that can be recognized by the user is increased, it is possible to provide the user with a highly convenient UI in accordance with the selected mode.

Hereinafter, descriptions are provided of some examples of processes performed by the on-vehicle device 100 and the external terminal device 120 in each of Mirroring mode and Extension mode.

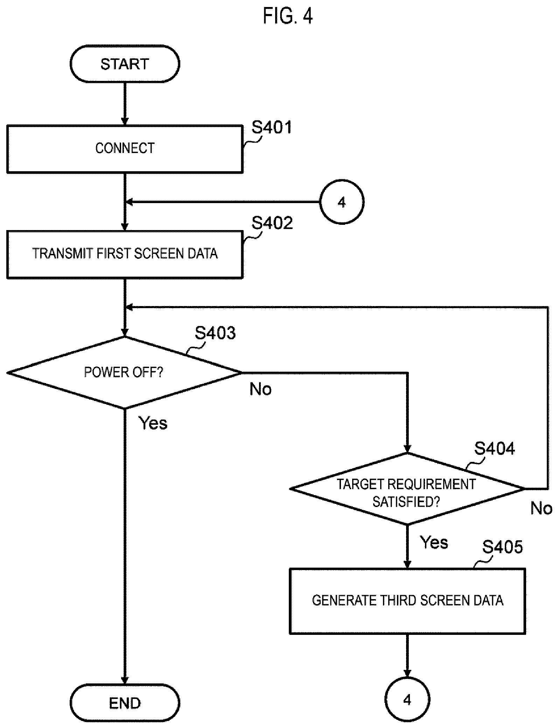

FIG. 4 is a flow chart illustrating an example flow of processes conducted, in Mirroring mode, by an on-vehicle device 100.

The on-vehicle device 100 is communicably connected to the external terminal device 120 (S401). For example, the on-vehicle device 100 receives a connection request from the external terminal device 120, and the connection is established in response to the connection request. The connection request from the external terminal device 120 may include the IDb of the external terminal device 120, the second display unit information (e.g., the vertical and horizontal sizes of the second display unit 122), and information representing the orientation of the external terminal device 120 (e.g., information from the gyro sensor). When the external terminal device 120 is a terminal device provided in the vehicle (e.g., in a rear seat), the connection request from the external terminal device 120 may include information indicating the position of the external terminal device 120 in the vehicle.

Since the mode determined by the mode determination unit 104 is Mirroring mode, the on-vehicle device 100 generates the first screen data of the same screen image 210 as the screen image 210 displayed on the first display unit 102.

The on-vehicle device 100 transmits the generated first screen data to the external terminal device 120 (S402).

In a case where the on-vehicle device 100 is in the power-on state (S403: No), and when satisfaction of the target requirement is detected (S404: Yes), for instance, when the orientation information from the external terminal device 120 indicates the portrait orientation, the on-vehicle device 100 generates the third screen data (S405). Thereafter, the procedure returns to step S402.

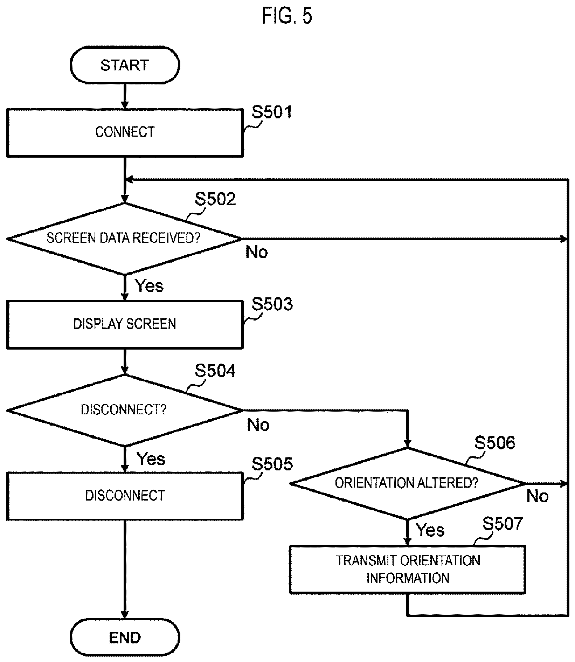

FIG. 5 is a flow chart illustrating an example flow of processes conducted, in Mirroring mode, by an external terminal device 120.

The external terminal device 120 is communicably connected to the on-vehicle device 100 (S501). For instance, the external terminal device 120 transmits a connection request to the on-vehicle device 100, and connection is established in response to the request.

When the screen data are received from the on-vehicle device 100 (S502: Yes), the external terminal device 120 displays the screen image represented by the screen data on the second display unit 122 (S503).

When disconnected from the on-vehicle device 100 (S504: Yes), for instance, when a disconnection operation by the user is received, the external terminal device 120 transmits a disconnection request to the on-vehicle device 100, and the disconnection is achieved in response to the request (S505).

When the disconnection with the on-vehicle device 100 is not achieved (S504: No) and an alteration in the orientation of the external terminal device 120 is detected (S506: Yes), the external terminal device 120 transmits the orientation information to the on-vehicle device 100 (S507). When the orientation information indicates the portrait orientation, the on-vehicle device 100 detects that the satisfaction of the target requirement. When the orientation information indicates the landscape orientation, the on-vehicle device 100 detects that the target requirement is not satisfied (or that the state in which the target requirement is satisfied is canceled).

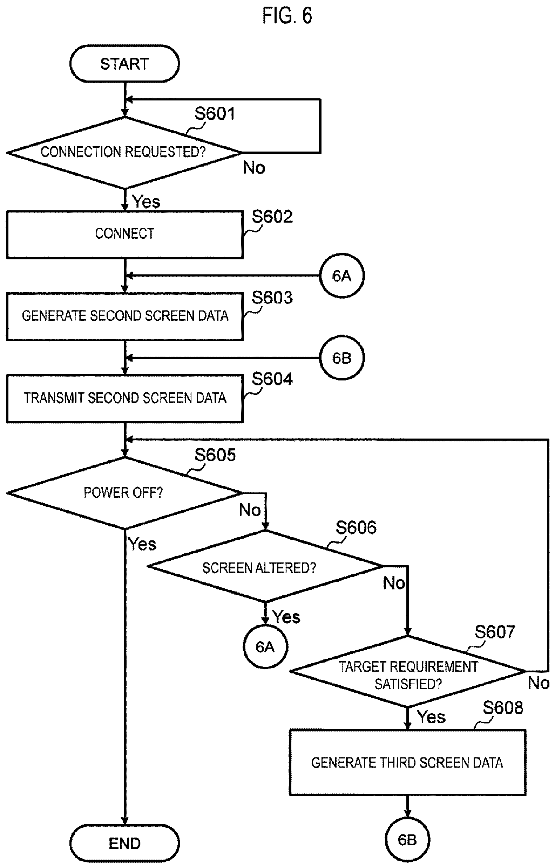

FIG. 6 is a flow chart illustrating an example flow of processes conducted, in Extension mode, by the on-vehicle device 100.

In response to the connection request from the external terminal device 120 (S601: Yes), the on-vehicle device 100 is communicably connected to the external terminal device 120 (S602). The connection request from the external terminal device 120 may include the ID of the external terminal device 120, the second display unit information, and information representing the orientation of the external terminal device 120 (e.g., information from the gyro sensor). When the external terminal device 120 is a terminal device provided in the vehicle (e.g., in a rear seat), the connection request from the external terminal device 120 may include information indicating the position of the external terminal device 120 in the vehicle.

Since the mode determined by the mode determination unit 104 is Extension mode, the on-vehicle device 100 generates the second screen data of the different screen image 213 than the screen image 210 displayed on the first display unit 102 (S603).

The on-vehicle device 100 transmits the generated second screen data to the external terminal device 120 (S604).

When the on-vehicle device 100 is powered on (S605: No) and the screen 210 displayed on the first display unit 102 is altered (S606: Yes), the procedure returns to S603 in order to display the screen image 213 corresponding to the post-alteration screen image 210 on the external terminal device 120. When the on-vehicle device 100 detects the satisfaction of the target requirement (S607: Yes), for instance, when the orientation information from the external terminal device 120 indicates the portrait orientation, the on-vehicle device 100 generates the third screen data (S608). Thereafter, the procedure returns to step S604.

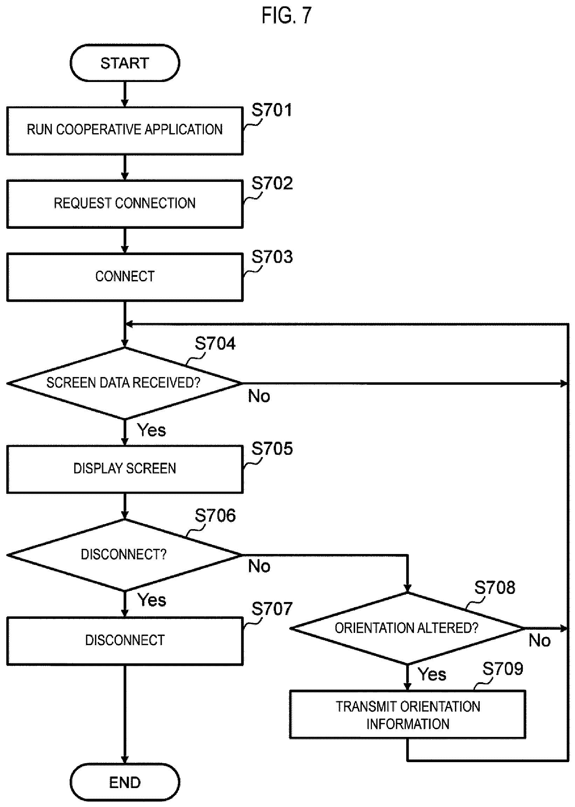

FIG. 7 is a flow chart illustrating an example flow of processes conducted, in Extension mode, by the external terminal device 120.

The external terminal device 120 runs the cooperative application (S701), transmits a connection request to the on-vehicle device 100 (S702), and connection is established in response to the request (S703). The "cooperative application" is an example application for cooperating with the on-vehicle device 100 and has a function of displaying an extended screen (a screen different from the screen 210 displayed on the first display unit 102).

When the screen data are received from the on-vehicle device 100 (S704: Yes), the external terminal device 120 displays the screen image represented by the screen data on the second display unit 122 (S705).

When the disconnected from the on-vehicle device 100(S706: Yes), the external terminal device 120 transmits a disconnection request to the on-vehicle device 100, and the disconnection is achieved in response to the request (S707).

When the disconnection with the on-vehicle device 100 is not achieved (S706: No) and an alteration in the orientation of the external terminal device 120 is detected (S708: Yes), the external terminal device 120 transmits the orientation information to the on-vehicle device 100 (S709).

Note that the present invention is not limited to the abovementioned embodiment and includes various modified examples. For example, while the abovementioned embodiment has been described in detail in order to describe the present invention in an easy-to-understand manner, the present invention is not necessarily limited to configurations with all the described configurations. Moreover, not only the deletion of such configurations, but also the replacement or addition of configurations is possible.

For example, the present invention can be applied not only to an on-vehicle device but also to any information processing device that can communicate with an external terminal device including a second display unit and that includes a first display unit.

In the generation of the screen data to the external terminal device 120, the screen data may be generated based on the position information indicating the whereabout of the external terminal device 120 (e.g., in which rear seat the external terminal device 120 is present) in addition to the second display unit information from the external device.

The external terminal device 120 may be an example information processing device, and the on-vehicle device 100 may be an example external terminal device.

### DESCRIPTION OF REFERENCE NUMERALS

100: On-vehicle device, 120: External terminal device

## Claims

1. An information processing device, comprising:
a reception unit configured to receive external display unit information, which is information on a vertical width and a horizontal width of a display unit of an external terminal device;
a screen generation unit configured to generate, based on the external display unit information, screen data of a screen to be displayed on the display unit of the external terminal device; and
a transmission unit configured to transmit, to the external terminal device, the screen data generated by the screen generation unit,
wherein the transmission unit is configured to
transmit, upon occurrence of a target event, screen data generated by the screen generation unit to the external terminal device, the target event being an event requiring an alteration in a vertical width and/or a horizontal width of a screen displayed on the external display unit, the screen data including: screen data on a first content obtained by altering a size of a pre-alteration screen, which is the screen displayed on the external display unit when the target event occurs, corresponding to an altered vertical width and an altered horizontal width of the external display unit; and screen data on a second content ; and
wherein the second content, generated in the external display unit, is displayed in a region due to a difference between a pre-altered vertical width and the corresponding post-altered the vertical width displayed on the external display unit, and between a pre-altered horizontal width and the post-altered horizontal width of the external display unit.

2. The information processing device according to Claim 1 further comprising a mode determination unit configured to determine a mode of a screen displayed on the external display unit from among a plurality of modes,
wherein the screen generation unit is configured to generate the screen data based on the mode determined by the mode determination unit.

3. The information processing device according to Claim 2, wherein the plurality of modes include:
a first mode in which a screen displayed on the external display unit is the same screen as a screen displayed on a display unit of the information processing device; and
a second mode in which the screen displayed on the external display unit is a different screen from the screen displayed on the display unit of the information processing device.

4. The information processing device according to Claim 3, wherein when, in an occasion of occurrence of the target event, the mode determined by the mode determination unit is the first mode, the second content is a content associated with the first content.

5. The information processing device according to Claims 1 to 4, wherein the occasion of occurrence of the target event is
an occasion of: identifying a longer horizontal width of the display unit of the information processing device than the vertical width thereof; and identifying a longer vertical width of the external display unit than the horizontal width thereof, or
an occasion of: identifying a shorter horizontal width of the display unit of the information processing device than a vertical width thereof; and identifying a shorter vertical width of the external display unit than a horizontal width thereof.

6. A computer program causing a computer to:
receive external display unit information, which is information on a vertical width and a horizontal width of a display unit of an external terminal device;
generate, based on the external display unit information, screen data of a screen to be displayed on the display unit of the external terminal device; and
transmit, upon occurrence of a target event, generated screen data to the external terminal device, the target event being an event requiring an alteration in a vertical width and/or a horizontal width of a screen displayed on the external display unit, the screen data including: screen data on a first content obtained by altering a size of a pre-alteration screen, which is the screen displayed on the external display unit when the target event occurs, corresponding to an altered vertical width and an altered horizontal width of the external display unit; and screen data on a second content,
wherein the second content, generated in the external display unit, is displayed in a region due to a difference between a pre-altered vertical width and the corresponding post-altered vertical width displayed on the external display unit, and between a pre-altered horizontal width and the post-altered horizontal width of the external display unit.

7. An information processing method comprising causing a computer to:
receive external display unit information, which is information on a vertical width and a horizontal width of a display unit of an external terminal device;
generate, based on the external display unit information, screen data of a screen to be displayed on the display unit of the external terminal device; and
transmit, upon occurrence of a target event, generated screen data to the external terminal device, the target event being an event requiring an alteration in a vertical width and/or a horizontal width of a screen displayed on the external display unit, the screen data including: screen data on a first content obtained by altering a size of a pre-altered screen, which is the screen displayed on the external display unit when the target event occurs, corresponding to an altered vertical width and an altered horizontal width of the external display unit; and screen data on a second content,
wherein the second content, generated in the external display unit, is displayed in a region due to a difference between a pre-altered vertical widthand the corresponding post-altered vertical width displayed on the external display unit, and between a pre-altered horizontal width and the post-altered horizontal width of the external display unit.
